# EUROPÄISCHE PATENTSCHRIFT

(11) **EP 1 778 504 B1**
(45) Veröffentlichungstag und Bekanntmachung des Hinweises auf die Patenterteilung: **05.03.2014**
(21) Anmeldenummer: 05740155.6
(22) Anmeldetag: 20.04.2005
(51) Int. Cl.: B60B 33/02

(54) **LENKROLLE MIT EINEM LAUFRAD**
CASTER COMPRISING A TRAILING WHEEL
GALET DE DIRECTION AVEC ROUE MOBILE

(30) Priorität: 21.07.2004 DE 102004035220
(43) Veröffentlichungstag der Anmeldung: 02.05.2007
(73) Patentinhaber: Tente GmbH & Co. KG, 42929 Wermelskirchen (DE)
(72) Erfinder: BLOCK, Wolfgang, 42929 Wermelskirchen (DE); MILBREDT, Manfred, 42859 Remscheid (DE)
(74) Vertreter: Müller, Enno
(86) Internationale Anmeldenummer: PCT/EP2005/051749
(87) Internationale Veröffentlichungsnummer: WO 2006/008198

(56) Entgegenhaltungen:
- DE-A1- 3 602 916
- DE-A1- 4 137 757
- DE-A1- 10 230 764
- DE-U1- 29 914 681

## Beschreibung

Die Erfindung betrifft eine Lenkrolle mit einem Laufrad nach den Merkmalen des Anspruches 1.

Lenkrollen, beispielsweise für Krankenhausbetten, Transportgeräte oder dergleichen sind seit langem aus dem Stand der Technik bekannt. Diese Lenkrollen besitzen üblicherweise einen vertikal abragenden Montagezapfen, über welchen die Lenkrolle an das Krankenhausbett oder dergleichen festlegbar ist. In der Regel ist innerhalb einer solchen Lenkrolle eine Bremseinrichtung angeordnet, welche über einen quer in dem Montagezapfen angeordneten Schalthebel, beispielsweise durch Fußbetätigung einer Bedienperson, in Richtung des Laufrades der Lenkrolle verlagerbar ist, um das Laufrad zu blockieren. Des Weiteren sind Lenkrollen bekannt, welche im Gabelinneren Konstruktionselemente aufweisen, mittels welcher die Lenkrolle auch als Bockrolle eingestellt werden kann.

Aus der DE 10230764 A1 ist eine derartige Lenkrolle bekannt mit einem in dem Montagezapfen axial feststehenden Hülsenteil, in welchem der Stößel vertikal beweglich aufgenommen ist. Dieses Hülsenteil weist einen Blockiervorsprung auf, der mit einer Blockieraufnahme an einem gleichfalls axial feststehenden Blockierungsteil zusammenwirkt. Unabhängig von einer Schaltstellung ist die Zusammenwirkung zwischen dem Blockiervorsprung und der Blockieraufnahme gegeben.

Aus der DE 36 02 916 A1 ist eine Lenkrolle bekannt, bei welcher der Stößel zur Zusammenwirkung mit der Bremseinrichtung für eine Totalfeststellung Dreh-Blockierungsvorsprünge aufweist, die unterhalb der Rastausformungen an einem Rastteller des Stößels abragen, zum drehsperrenden Eintreten in die dazu deckungsgleich ausgerichtete Blockierungsaufnahmen des Blockierungsteils, wobei auch die Unterseite des Rasttellers flächig auf dem Blockierungsteil aufliegt.

Ausgehend von dem vorgenannten Stand der Technik beschäftigt sich die Erfindung mit der Aufgabenstellung, eine Lenkrolle mit Richtungsfeststellung und Totalfeststellung günstig auszugestalten.

Diese Aufgabe ist beim Gegenstand des Anspruches 1 gelöst, wobei darauf abgestellt ist, dass ein Fortsatz des Stößels im Zuge der Absenkung eine Öffnung des Blockierungsteils durchwandert und die Bremseinrichtung beaufschlagt.

Die Beaufschlagung der Bremseinrichtung erfolgt nicht mittels des Blockierungsteils, sondern durch den Stößel, der hierzu das Blockierungsteil durchsetzt. Das Blockierungsteil kann damit unabhängig von der Bremseinrichtung ausgebildet sein.

Der unter Federvorspannung unmittelbar mit dem gabelfesten Richtungs-Feststellungsteil zusammenwirkende Stößel lässt die Lenkrolle mindestens in einer Stellung schwenkbeweglich fixieren. Der Stößel ist zugleich das Wirkteil bezüglich der Richtungs-Feststellung. Der Stößel hat eine Doppelfunktion. Zum Einen, dass der Stößel über die Schaltbetätigung und einhergehende Abwärtsverlagerung das Laufrad bremst bzw. total feststellt. Zum Anderen aber unmittelbar mit dem Richtungs-Feststellungsteil bezüglich einer Bockrollen-Stellung der Lenkrolle zusammenwirkt. Dies unter Federvorspannung in eine der Bremsstellung entgegengesetzte Stellung, beispielsweise unter Nutzung einer den Stößel in die Brems-Freigabestellung beaufschlagende, axial wirkenden Feder. Es ist funktionsmäßig nicht nur der Stößelabwärtshub, sondern auch der Stößelaufwärtshub genutzt. Die Federvorspannung in die Richtungs-Feststell-Stellung, die ständig einwirkt, gibt die Möglichkeit, die Verschwenkbarkeit im Hinblick auf eine Leichtgängigkeit oder Schwergängigkeit zu beeinflussen.

Der Stößel weist eine Rastausformung auf, die mit einer Rastausnehmung des Richtungs-Feststellungsteils zusammenwirkt. Hierbei ist die Rastausnehmung des Richtungs-Feststellungsteils der Rastausformung des Stößels zum sicheren Ineinandergreifen entsprechend angepaßt. Alternativ kann vorgesehen sein, dass der Stößel die Rastausnehmung und das Richtungs-Feststellungsteil die Rastausformung besitzt. Weiter bevorzugt wird vorgeschlagen, dass die Richtungs-Feststell-Stellung allein durch ein auf das Laufrad wirkendes Drehmoment aufhebbar ist. Das heißt, ist die Lenkrolle beispielsweise an einem Krankenhausbett positioniert und über das gabelfeste Richtungs-Feststellungsteil die Bockrollen-Stellung aktiviert, ist für eine Bedienperson des Bettes eine erleichterte, geradlinige Schieberichtung des Krankenhausbettes, beispielsweise auf einem langgestreckten Korridor gegeben. Ist gegebenenfalls eine Richtungsänderung der Schieberichtung erwünscht, kann die Bedienperson ein Moment über das Bettgestell quer zur Schieberichtung auf die Lenkrolle ausüben, um die federvorgespannte Richtungs-Feststell-Stellung außer Kraft zu setzen. Letztere kann beispielsweise über einen Schwenkrastwinkel von 180° definiert sein. Alternativ können auch andere Rastwinkel vorgesehen sein. Auch besteht ein weiterer Vorteil darin, dass die Rastausformung an einem, einstückig mit dem Stößel ausgebildeten, Rastteller ausgebildet ist. Hierdurch ist eine bauliche Vereinfachung und darüber hinaus eine Gewichtsreduzierung gegeben. Bevorzugt weist der Rastteller eine kreisrunde Grundkontur auf. Ein ausgebildeter Rastteller mit eckiger Grundkontur ist ebenfalls möglich. Bezüglich der Rastausformung wird vorgeschlagen, dass diese etwa rippenartig ausgebildet ist und koaxial zur Stößelachse verläuft. Eine Ausgestaltung der Rastausformung in Zapfengestalt ist auch möglich. Auch kann vorgesehen sein, dass mehrere Rastausformungen aus dem Rastteller ausgeformt sind. Diesbezüglich ist bevorzugt eine diametrale Anordnung sowohl für die Rastausformungen des Rasttellers als auch für die mit diesen zusammenwirkenden topfartig ausgeformten Rastausnehmungen des Richtungs-Feststellungsteiles vorgesehen. Hierzu sind die Rastausnehmungen zu der zuvor beschriebenen Ausgestaltung dementsprechend in ihrer Ausrichtung anzupassen. Eine weitere bauliche Vereinfachung ist dadurch erreicht, dass der Stößel zur Zusammenwirkung mit der Bremseinrichtung für eine Totalfeststellung Dreh-Blockierungsvorsprünge aufweist, wobei die Dreh-Blockierungsvorsprünge an dem Rastteller entgegengesetzt gerichtet zu der Ratsausformung angeformt sind. Hierbei können die Dreh-Blockierungsvorsprünge etwa zylinderförmig mit kreisrundem Querschnitt ausgestaltet sein und jeweils koaxial zu der Stößelachse, diese kreisabschnittsförmig umgebend verlaufen. Die Dreh-Blockierungsvorsprünge können jeweils zueinander einen Winkelabstand zwischen 5 und 20° aufweisen. Weiter kann vorgesehen sein, dass die Dreh-Blockierungsvorsprünge bei Absenkung des Stößels in Blockierungsaufnahmen eines Blockierungsteiles eingreifen. Hierbei sind die Blockierungsaufnahmen des zwischen dem Rastteller und der Bremseinrichtung angeordneten gabelfesten Blockierungsteils der Grundkontur der Dreh-Blockierungsvorsprünge und deren um den Stößel koaxialer Anordnung angepaßt, um bei Absenkung ein schnelles und sicheres Eingreifen der Dreh-Blockierungsvorsprünge in die Blockierungsaufnahmen zu erzielen. Erfindungsgemäß besitzt, wie bereits eingangs erwähnt, der Stößel eine Doppelfunktion. Zum Einen ist der Stößel bei Schaltnockenbetätigung beispielsweise durch das Bedienpersonal und daraus einhergehender vertikaler Absenkung für die Aktivierung der mit dem Laufrad zusammenwirkenden Bremseinrichtung und gegebenenfalls Totalfeststellung (Dreh- und Schwenkfeststellung) vorgesehen. Zum Anderen bei vertikaler federvorgespannter Aufwärtsverlagerung, also bei einer Nichtwirkstellung mit der Bremseinrichtung, die Zusammenwirkung mit dem Richtungs-Feststellungsteil, um die Lenkrolle als Bockrolle zu nutzen. Darüber hinaus ist vorgesehen, dass das Blockierungsteil gesondert von dem Stößel und der Bremseinrichtung ausgebildet ist. Diesbezüglich ist vorgesehen, dass das Blockierungsteil und/oder das Richtungs-Feststellungsteil jeweils als Metallteile ausgebildet sind, während jedenfalls das den Rastteller aufweisende Teil des Stößels und/oder die Bremseinrichtung als Kunststoffteile ausgebildet sind. Auch die Bremseinrichtung kann aus einem Kunststoffmaterial bestehen. Möglich ist auch, den Stößel aus einem Metallwerkstoff herzustellen, während der Rastteller aus Kunststoff geformt beispielsweise an den Stößel angeschraubt oder angespritzt ist. Bevorzugt werden der Stößel und der Rastteller jedoch einstückig aus einem widerstandsfähigen Kunststoff-Werkstoff gefertigt.

Zudem wird vorgeschlagen, dass der Stößel in seinem oberen Teil als Gegennocken zu dem Schaltnocken ausgebildet ist, wobei der Gegennocken an einem gesonderten Nockenteil ausgebildet ist und mit dem die Rastausformung aufweisenden Stößelabschnitt schraubverbunden ist. Hierzu besitzt das Nockenteil eine zentrisch angeordnete Sacklochbohrung mit Innengewinde. Der Stößel weist an seinem oberen Ende ein Außengewinde auf. Ein auf den Stößel aufschraubbares Nockenteil hat gegenüber einem fest angeordneten Nockenteil den Vorteil, dass dieses über die Schraubverbindung in Achsrichtung des Stößels längeneinstellbar ist. Dies wirkt sich insbesondere auf den Verlagerungsweg des über den Schaltnocken verlagerbaren Stößels aus. Des Weiteren wird vorgeschlagen, dass der Stößel in Richtung auf den Schaltnocken federvorgespannt ist. Hierdurch ist der Stößel bzw. dessen angeformter Rastteller und an diesem die angeformte Rastausformung immer bestrebt, einen vertikal aufwärts gerichteten Hub auszuführen, also von der Bremseinrichtung abgewandt in Richtung auf das Richtungs-Feststellungsteil. Die Aufwärtsverlagerung des Stößels wird hierbei in vorteilhafter Weise von dem gabelfesten Richtungs-Feststellungsteil gehemmt.

Der Stößel durchsetzt eine zentrale Öffnung des Richtungs-Feststellungsteils. Der Rastteller stützt sich mit seiner Rastausformung an dem Richtungs-Feststellungsteil ab. Bei dieser Abstützung ist die Lenkfunktion der Rolle zunächst gegebenenfalls gegeben, bis bei Verschwenkung der Lenkrolle um die Montageachse die Rastausformung des Rasttellers deckungsgleich zu der Rastausnehmung des Richtungs-Feststellungsteils ausgerichtet ist. Ist dies der Fall, greift die Rastausformung bedingt durch die Federvorspannung in die Rastausnehmung, wodurch die Bockrollenstellung gegeben ist. Vorteilhaft ist auch, dass die Feder auf das Nockenteil einwirkt, wobei die Feder die bereits bekannte, den Stößel umgebende Stößelfeder ist, welche auch für das Zusammenwirken des Stößels mit dem gabelfesten Richtungs-Feststellungsteil zuständig ist.

Der Schaltnocken kann vorteilhafterweise nur zwei Schaltstellungen aufweisen, wobei die eine Schaltstellung des Schaltnockens die Richtungs-Feststell-Stellung definiert und über die andere Schaltstellung die Bremsstellung bzw. Totalfeststellung gegeben ist. Bei baulicher Modifikation des Stößels kann vorgesehen sein, dass dieser nach Deaktivierung der Bremseinrichtung in einer dritten Stellung verweilt, so dass die Lenkrolle ohne Verrastung frei schwenkbeweglich ist.

Nachstehend ist die Erfindung anhand der beigefügten Zeichnung, die jedoch lediglich ein Ausführungsbeispiel zeigt, erläutert. Es zeigt:
- Fig. 1: eine perspektivisch dargestellte erfindungsgemäße Lenkrolle;
- Fig. 2: eine Schnittdarstellung gemäß der Linie II - II in Figur 1 betreffend eine Lenkrollen-Funktion;
- Fig. 3: eine Schnittdarstellung gemäß der Darstellung in Figur 2, wobei die Lenkrolle durch axiale Aufwärtsverlagerung des Stößels die Bockrollen-Funktion bereitstellt;
- Fig. 4: eine Schnittdarstellung gemäß den Darstellungen in Figuren 3 und 2, wobei hier mittels Drehbetätigung des Schaltnockens und einhergehender Absenkung des Stößels eine Totalblockierung der Lenkrolle bzw. des Laufrades erzielt ist;
- Fig. 5: die erfindungswesentlichen Konstruktionselemente in einer explosionsperspektivischen Ansicht;
- Fig. 6: einen Querschnitt der Stößelseele mit strichpunktiert dargestellter Lageröffnung des Montagezapfens.

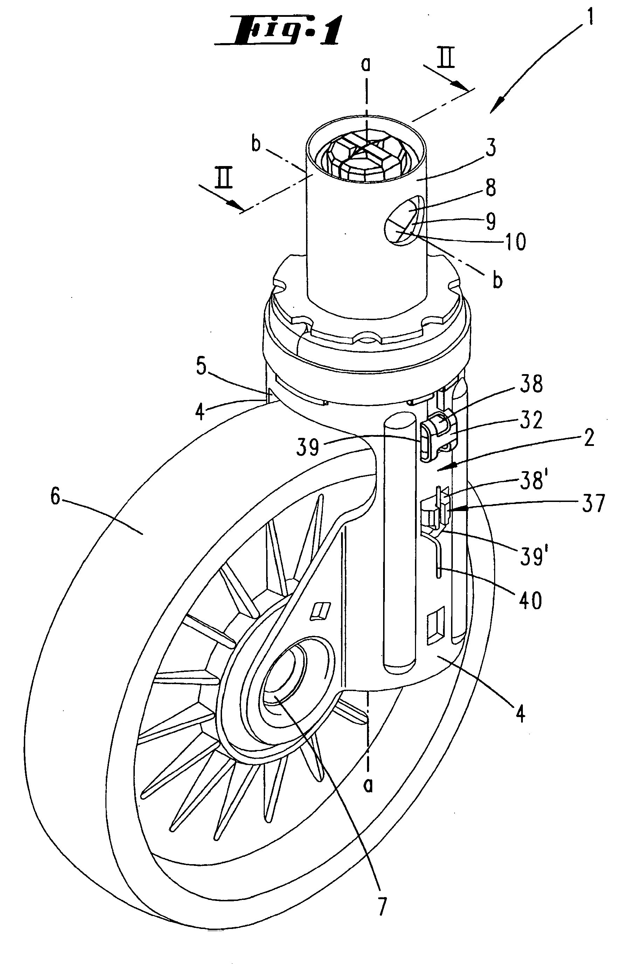

Dargestellt und beschrieben ist zunächst mit Bezug zu Figur 1 eine Lenkrolle 1 mit einer Laufrollengabel 2, von welcher ein zylinderförmig ausgestalteter Montagezapfen 3, eine Schwenkachse a umgebend, vertikal abragt. Die Laufrollengabel 2 flankiert mit ihren deckungsgleich gegenüberliegend angeordneten Gabelschenkeln 4 ein in einer Gabelhöhlung 5 gelagertes Laufrad 6. Zur Lagerung des Laufrades 6 dient eine Hohlachse 7, welche das Laufrad 6 zentrisch durchsetzt und jeweils endseitig an den Gabelschenkeln 4 gehaltert ist.

Die dargestellte Lenkrolle 1 kann beispielsweise an einem Krankenhausbett oder dergleichen positioniert sein. Die Festlegung erfolgt dann in üblicher Weise und ist hier deshalb nicht näher beschrieben.

In dem Montagezapfen 3 ist an bekannter Stelle ein um eine Betätigungsachse b schwenkbeweglich angeordneter Schaltnocken 8 vorgesehen. Hierbei ist die Betätigungsachse b rechtwinklig zu der Schwenkachse a der Lenkrolle 1 ausgerichtet. Die Fixierung des Schaltnockens 8 innerhalb des Montagezapfens 3 erfolgt in bekannter Weise über eine um die Schwenkachse a ausgerichtete Befestigungshülse 9. Zur Drehmitnahme des Schaltnockens 8 besitzt dieser eine zentrisch angeordnete unrunde Kupplungsöffnung 10, welche von einem Schalthebelschaft 11 durchsetzt ist, wobei dessen Querschnitt zwecks Formschluss dem Querschnitt der Kupplungsöffnung 10 angepaßt ist.

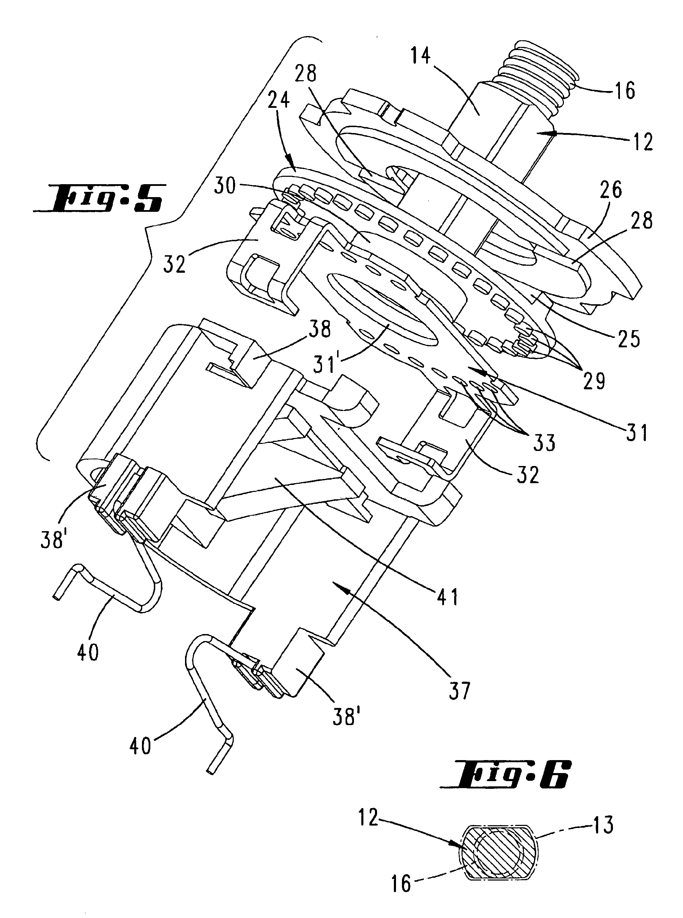

Bezogen auf die Darstellungen ist unterhalb des Schaltnockens 8 ein Stößel 12 vorgesehen. Dieser ist um die Schwenkachse a ausgerichtet vertikal in dem Montagezapfen 3 verlagerbar. Der Montagezapfen 3 besitzt einen um die Schwenkachse a ausgerichteten durchmesserreduzierten Stößelgang 13, wobei der Querschnitt des Stößelganges 13 dem Querschnitt des Stößels angepaßt ist. Die Grundkontur des Querschnittes des Stößels 12 bzw. des Stößelganges 13 ist etwa rechteckförmig mit konvex ausgeformten Schmalseiten (vgl. insbesondere die Darstellung in Figur 6). Hierdurch ist der Stößel 12 innerhalb des Montagezapfens 3 drehgesichert.

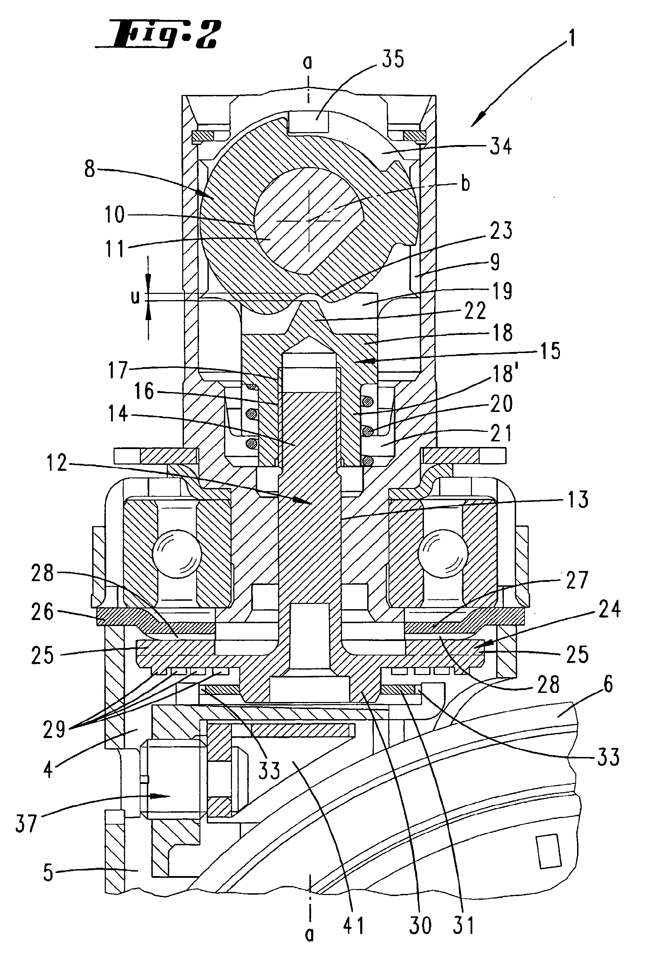

Wie die Darstellung in Figur 2 zeigt, ist das zwischen der Öffnung des Stößelganges 13 und dem Schaltnocken 8 angeordnete freie Ende 14 des Stößels 12 mit einem Nockenteil 15 schraubverbunden. Hierzu besitzt das freie Ende 14 des Stößels 12 ein Außengewinde 16, welches mit einem zentrisch in dem Nockenteil 15 eingebrachten Innengewinde 17 kämmt. Das Nockenteil 15 weist eine topfartige Gestalt mit kreisrundem Querschnitt auf, wobei an dem dem Stößel 12 abgewandten Ende ein durchmesservergrößerter Bereich als Ringkragen 18 ausgebildet ist. Ferner wird das Nockenteil 15 des Stößels 12 innerhalb des Montagezapfens 3 bezogen auf die Darstellungen vertikal geführt. Hierzu besitzt der Montagezapfen 3 eine die Schwenkachse a umgebende und dem Durchmesser des Ringkragens 18 angepaßte Höhlung 19. Darüber hinaus ist der gegenüber dem Ringkragen 18 durchmesserreduzierte Abschnitt 18' des Nockenteiles 15 von einer Druckfeder 20 umgeben, wobei sich das eine Ende der Druckfeder 20 an der Unterseite des Ringkragens 18 abstützt. Das andere gegenüberliegende Federende stützt sich an einem Rand einer weiteren die Schwenkachse a umgebenden, eine Führung ausbildende Höhlung 21 ab. Diese ist in ihrem Durchmesser dem Durchmesser des Abschnittes 18' des Nockenteiles 15 angepaßt. Somit ist der Stößel 12 in Richtung des Schaltnockens 8 mittels der Druckfeder 20 federkraftbelastet. Darüber hinaus weist die auf den Schaltnocken 8 zugewandte Stirnfläche des Ringkragens 18 eine zentrische Ausformung in Form eines Gegennockens 22 auf.

Wie in Figur 2 zu erkennen, ist der Gegennocken 22 zum Einen von einer konkav ausgeformten Steuermulde 23 des Schaltnockens 8 umgeben, andererseits aber von dem Boden der Steuermulde 23 mit einem Maß u beabstandet.

Der Stößel 12 erstreckt sich in Richtung auf das Laufrad 6 gesehen weiter in die Gabelhöhlung 5. Diese umgibt eine im Querschnitt kreisrunde Anformung des Stößels 12. Die durchmesservergrößerte Anformung übernimmt die Funktion eines Rasttellers 24, welcher die Schwenkachse a umgebend quer zu dieser an dem Stößel 12 angeformt ist. Der Rastteller 24 besitzt auf seiner auf den Schaltnocken 8 zugewandten Tellerfläche zwei gegenüberliegend angeordnete etwa rippenartig ausgebildete Rastausformungen 25 mit jeweils einem trapezförmigen Querschnitt. Alternativ kann der Rastteller 24 auch mehr als zwei Rastausformungen 25 aufweisen. Diese Rastausformungen 25 werden in der Lenkrolleneinstellung bedingt durch die Federkraft der Druckfeder 20 flächig gegen die Unterseite eines Richtungs-Feststellungsteils 26 gedrückt. Das gegenüber dem Rastteller 24 im Durchmesser größer bemessene Feststellungsteil 26 ist drehfest an der Gabel 2 festgelegt und beispielsweise als Stanzbiegeteil ausgebildet. Das kreisringförmig gestaltete und bezüglich der Schwenkachse a zentral angeordnete Feststellungsteil 26 weist eine auf das Laufrad 6 zugewandte kreisrunde plateauförmige Ausformung 27 auf, die ihrerseits zwei quer zur Schwenkachse a ausgerichtete und diametral gegenüberliegend angeordnete Rastausnehmungen 28 aufweist. Diese Rastausnehmungen 28 sind praktisch als ein Negativ der Rastausformungen 25 des Rasttellers 24 anzusehen (vgl. insbesondere die Darstellung in Fig. 5). Auch kann das Feststellungsteil 26 wie der Rastteller 24 mehr als zwei Rastausformungen 25 aufweisen.

An der den Rastausformungen 25 abgewandten Unterseite des Rasttellers 24 besitzt der Stößel 12 Dreh-Blockierungsvorsprünge 29. Diese verlaufen koaxial zu der Schwenkachse a jeweils in Umfangsrichtung des Rasttellers 24 und weisen eine etwa zylinderförmige Gestalt auf. In diesem Ausführungsbeispiel weisen die Vorsprünge 29 zueinander einen Winkelabstand von 12° auf. Andere Winkelabstände wären auch möglich.

Von dem Rastteller 24 entspringt dem Stößel 12 in Richtung des Laufrades 6 gesehen ein gegenüber dem Rastteller 24 durchmesserreduzierter kreisrunder zylinderförmiger Fortsatz 30, welcher seinerseits in eine zentrisch angeordnete Durchtrittsöffnung 31' eines um die Schwenkachse a angeordneten Dreh-Blockierungsteils 31 führungstechnisch einliegt. Letzteres, zwischen dem Laufrad 6 und dem Rastteller 24 in der Gabelhöhlung 5 einliegende Blockierungsteil 31 ist ebenfalls wie das Richtungs-Feststellungsteil 26 drehfest an der Gabel 2 gehaltert und beispielsweise als Stanzbiegeteil ausgebildet. Im Wesentlichen besteht das Blockierungsteil 31 aus einer Platte mit etwa rechteckiger Grundkontur. Jeweils an den Schmalseiten dieser Platte wurzeln zwei diametral gegenüberliegende käfigartig ausgestaltete Ausleger 32, über welche das Blockierungsteil 31 an die Gabelschenkel 4 der Gabel 2 festgelegt ist. Darüber hinaus besitzt das Blockierungsteil 31 im Bereich der Platte koaxial zu der Schwenkachse a verlaufende und um die Öffnung 31' mit Abstand angeordnete Blockierungsaufnahmen 33 mit kreisrundem Querschnitt. Hierbei sind die Ausmaße, also Länge und Durchmesser der Blockierungsaufnahmen 33 denen der Dreh-Blockierungsvorsprünge 29 des Rasttellers 24 angepaßt. Die die Lenkstellung der Rolle 1 darstellende Figur 2 zeigt die aus den Rastausnehmungen 28 ausgerückten Rastausformungen 25. Diese ermöglichen beim Ausführungsbeispiel eine annähernd 180°-Drehung des Laufrades 6 um die Schwenkachse a. In der Schwenkstellung der Rolle 1 liegt entsprechend keine Verrastung vor. Die für die Festlegung der Lenkfunktion zuständigen Rastausformungen 25 des Stößels 12 liegen mittels Federvorspannung der Druckfeder 20 an der plateauförmigen Ausformung 27 an bzw. gleiten bei Lenkbetätigung der Rolle 1 aufgrund der Federvorspannung an dieser entlang, bis die Rastausformungen 25 und die Rastausnehmungen 28 deckungsgleich zueinander ausgerichtet sind und durch die Federvorspannung verrastend zusammenwirken.

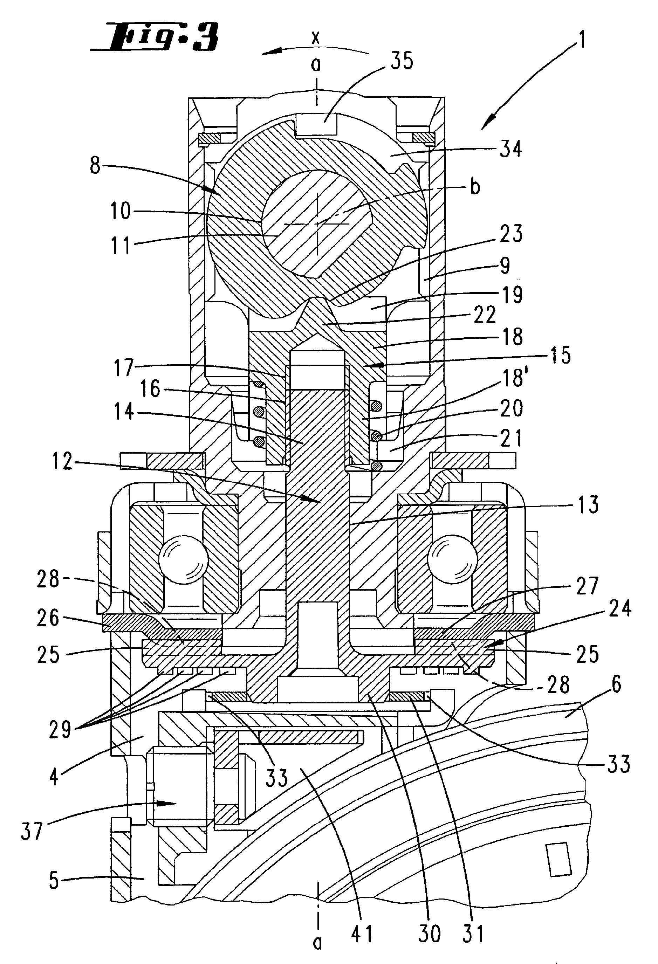

Ist beispielsweise die Lenkrolle 1 an einem Krankenhausbett festgelegt, ist die Bockrollenstellung der Rolle 1 für einen erleichterten geradeaus gerichteten Schiebevorgang des Bettes praktisch als Grundstellung anzusehen, so dass sowohl die Rastausformungen 25 als auch die Rastausnehmungen 28 in ihrer Längserstreckung in Schieberichtung bzw. in Abrollrichtung des Laufrades - bzw. wesentlich: Vorzugsrollrichtung des Gegenstandes, an dem das Laufrad montiert ist - ausgerichtet sind. In dieser Bockrollenstellung liegen die Rastausformungen 25 des Stößels 12 drehsperrend in den Rastausnehmungen 28 des gabelfesten Richtungs-Festellungsteiles 26 ein. Dies unter Federvorspannung der Druckfeder 20. Wie in Figur 3 zu erkennen, ist durch das Eingreifen der Rastausformungen 25 in die Rastausnehmungen 28 des aufwärts verlagerten Stößels 12 auch das zwischen dem Gegennocken 22 und der Steuermulde 23 einen Freigang ausbildende Abstandsmaß u überwunden, so dass der Gegennocken 22 sich auf dem Boden der Steuermulde 23 federkraftbelastet abstützt.

Die Eintauchtiefe der Rastausformungen 25 in die Rastausnehmungen 28 ist konform mit der Eintauchtiefe bzw. mit dem Abstand u des Gegennockens 22 in die Steuermulde 23 bei ausgerückter Stellung des Stößels gemäß Figur 2. Hierdurch gelangt die Rolle 1 ohne Schalthebelbetätigung in die Bockrollenstellung zum Geradeauslauf des Krankenhausbettes oder dergleichen. Der Abstand u kann beispielsweise die Größenordnung von 1 mm betragen. Hierbei verbleibt in der Stellung gemäß Figur 2 nach unten, bis zum Erreichen der Totalfeststellung mindestens ein gleicher Abstand, vorzugsweise ein anderthalbmal oder mehr größerer Abstand.

Ist gegebenenfalls die Freigabe der Lenkfunktion der Rolle 1 gefordert, kann dies während des Laufbetriebes der an einem Krankenhausbett oder dergleichen positionierten Rolle 1 mittels eines auf die Rolle 1 quer zur Laufrichtung ausgeübten Drehmoments vorgenomnnen werden. Dies kann beispielsweise über die Bedienperson durch einen Links- oder Rechtsschwenk des Krankenhausbettes erfolgen. Durch das auf die Lenkrollengabel 2 aufgebrachte Drehmoment, welches hinsichtlich der resultierenden Kraft größer sein muss als die Federkraft der Druckfeder 20, verlagert sich der drehfeste Stößel 12 in Richtung des Laufrades 6. Aufgrund der Schwenkbewegung drängt das gabelfeste Richtungs-Feststellungsteil über die schrägen Flanken der Rastausnehmungen 28, die ebenfalls eine Schrägflankierung aufweisenden Rastausformungen 25 aus den Rastausnehmungen 28 und verlagert einhergehend den Stößel 12 abwärts, bis die Rastausformungen 25 flächig an der plateauförmigen Ausformung 27 gemäß der Darstellung in Figur 2 anliegen. Die Höhe des auslösenden Drehmomentes ist in erster Linie von der Federkraft der Druckfeder 20 abhängig. Ist anschließend wieder eine Bockrollenstellung der Lenkrolle 1 erwünscht, ist diese durch Verschwenkung der Lenkrolle 1 in die Richtungs-Feststellungs-Stellung erreichbar, in welche die Rastausformungen 25 sperrend in die Rastausnehmungen 28 eintreten.

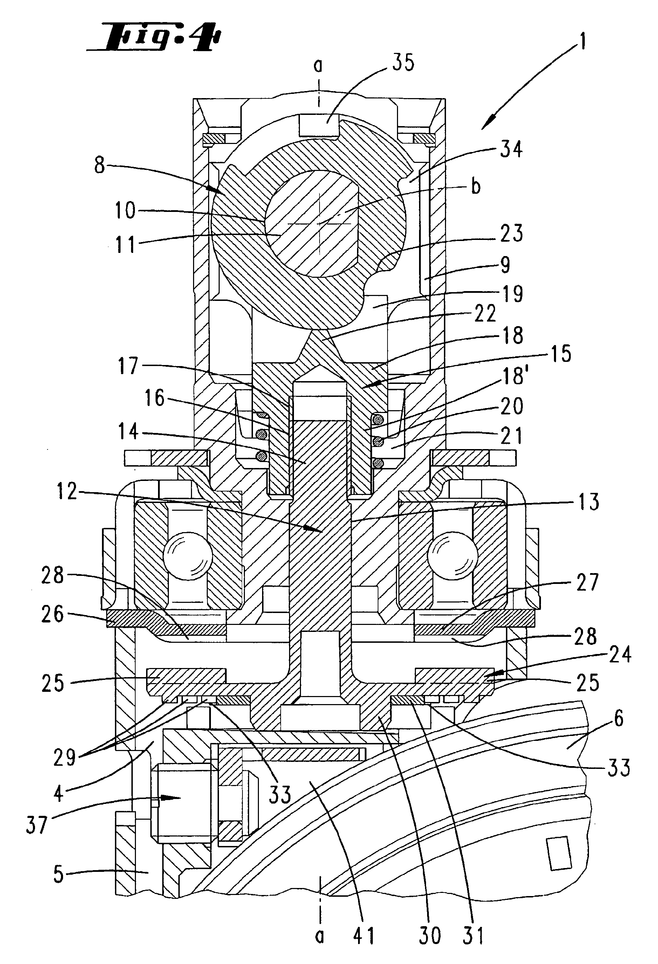

Zur Erlangung einer Total-Feststellung der Lenkrolle 1 bzw. des Laufrades 6 wird der Schaltnocken 8 über den Schalthebelschaft 11 in Drehrichtung x gedreht. Dabei ist der Schaltnocken innerhalb des Montagezapfens 3 anschlagbegrenzt gelagert derart, dass der Schaltnocken 8 bezogen auf die Darstellungen oberhalb der Betätigungsachse b angeordnet eine Vertiefung 34 in Umfangsrichtung aufweist, in welche ein gehäusefester Zapfen 35 sperrend hineinragt und jeweils mit den Seitenflanken der Vertiefung 34 zusammenwirkt. In den Figuren 2 und 3 ist zu erkennen, dass der Schaltnocken 8 für die Bockrollenfunktion bzw. Lenkrollenfunktion der Rolle 1 nicht betätigt werden muss. Die Figur 4 zeigt die Totalfeststellung der Rolle 1. Hier ist zu erkennen, dass der Schaltnocken 8 in Richtung x anschlagbegrenzt verdreht wurde und eine an der Steuermulde 23 des Schaltnockens 8 anschließende, in Umfangsrichtung ausgerichtete Steuerkurve 36 den Gegennocken 22 bzw. den mit diesem verbundenen Stößel 12 gegen die Federkraft der Druckfeder 20 vertikal absenkt. Mittels der schrägen Seitenflanken des Gegennockens 22 ist sichergestellt, dass der Schaltnocken 8 über die Steuerkurve 36 ordnungsgemäß den Stößel 12 abwärts verlagert. Im Zuge der durch die Höhlungen 19 und 21 bzw. des Stößelganges 13 geführten vertikalen Abwärtsverlagerung des Stößels 12 sind die Rastausformungen 25 von dem Richtungs-Feststellungsteil 26 berührungslos beabstandet. Die unterhalb der Rastausformungen 25 an dem Rastteller 24 abragenden Dreh-Blockierungsvorsprünge 29 treten in die dazu deckungsgleich ausgerichteten Blockierungsaufnahmen 33 des Blockierungsteiles 31 drehsperrend ein. Dabei liegt die Unterseite des Rasttellers 24 flächig auf dem Blockierungsteil 31 auf. Hierdurch ist die Lenkrolle 1 um die Schwenkachse a drehblockiert. Der Fortsatz 30 des Stößels 12 durchwandert im Zuge der Absenkung die Öffnung 31' des Blockierungsteils 31 und beaufschlagt eine in der Gabelhöhlung 5 oberhalb des Laufrades 6 angeordnete Bremseinrichtung 37. Die Bremseinrichtung 37 besitzt jeweils Lagerfortsätze 38 und 38', mittels welcher sie an den Gabelschenkeln 4 gelagert ist. Hierzu weisen die Gabelschenkel 4 jeweils untereinander und gegenüberliegend angeordnete, quer zur Schwenkachse a ausgerichtete Durchbrechungen in Form von Fenstern 39 und 39' (vgl. Fig.1) auf. In den Fenstern 39 liegen auch die käfigartig ausgestalteten Ausleger 32 des Blockierungsteils 31 dreh- und verlagerfest ein. In den käfigartigen Auslegern 32 liegen die Lagerfortsätze 38 der Bremseinrichtung 37 ein. In den Fenstern 39' der Gabelschenkel 4 liegen die jeweils mit Haarnadelfedern 40 zusammenwirkenden Lagerfortsätze 38' ein, wobei jeweils ein Federarm der aufeinander zu gerichteten Haarnadelfedern 40 sich an den Lagerfortsätzen 38 einliegend abstützen. Der jeweilige andere Federarm der Haarnadelfedern 40 stützt sich randseitig an den Fenstern 39' der Gabelschenkel 4 ab. Hierdurch ist die Bremseinrichtung 37 bei Absenkung des Stößels 12 federvorgespannt. Das eigentliche Bremselement für das Laufrad 6 ist ein in der Bremseinrichtung 37 angeordneter Bremsklotz 41, welcher bei Abwärtsverlagerung auf die Lauffläche des Laufrades 6 bremstechnisch einwirkt. Darüber hinaus kann die Auflagekraft bzw. die Bremskraft des Bremsklotzes 41 nachhaltig eingestellt werden derart, dass der Bremsklotz 41 mittels einer Schraubverbindung an der Bremseinrichtung 37 befestigt ist. Mittels dieser Schraubverbindung kann der Bremsklotz 41 linear, also quer zur Schwenkachse a gesehen, in Richtung der Lauffläche des Laufrades 6 verlagert werden. Zur Bedienung des Schraubkörpers mittels eines geeigneten Schraubwerkzeuges ist eine dementsprechend ausgestaltete Öffnung in der Gabel 2 vorgesehen.

Bei der hier dargestellten Lenkrolle 1 weist der Schaltnocken 8 lediglich zwei Schaltstellungen auf. Eine nicht betätigte Außer-Wirkstellung, in der die Rolle 1 entweder als Lenk- oder Bockrolle nutzbar ist oder in einer verschwenkten Wirkstellung, wobei dann der Stößel 12 mittels der Haarnadelfedern 40 bzw. der Druckfeder 20 in Richtung auf den Schaltnocken 8 weisend federvorgespannt ist. Erfolgt eine Lösung der Totalblockierung und daraus resultierender Stellung des Schaltnockens 8 gemäß der Darstellung in den Figuren 2 und 3, hat die Federkraft der Druckfeder 20 und der Haarnadelfedern 40 den Stößel 12 bzw. den Gegennocken 22 in Richtung auf den Schaltnocken 8 bzw. in die Steuermulde 23 verlagert. Je nachdem, in welchem Winkel die Lenkrolle ausgerichtet ist, stützen sich entweder die Rastausformungen 25 wieder zur Lenkrollenfunktion der Rolle 1 an der Unterseite des Rasttellers 24 ab oder treten zur Ausbildung der Bockrollenfunktion der Rolle 1 sperrend in die Rastausnehmungen 28 ein.

## Patentansprüche

1. Lenkrolle (1) mit einem Laufrad (6), einer Gabel (2) und einem Montagezapfen (3), wobei die Gabel (2) relativ zu dem Montagezapfen (3) um eine vertikale Schwenkachse (a) verschwenkbar ist und weiter in einer Gabelhöhlung (5) oberhalb des Laufrades eine Bremseinrichtung (37) angeordnet ist, die durch einen über einen Schaltnocken (8) betätigten Stößel (12) in die Bremsstellung verlagerbar ist, wobei der Stößel (12) Rastausformungen (25) aufweist, die mit Rastausnehmungen (28) eines gabelfesten Richtungs-Feststellungsteils (26) zusammenwirken, bei Federvorspannung in eine Richtungs-Feststellung, und der Stößel (12) zur Zusammenwirkung mit der Bremseinrichtung (37) für eine Totalfeststellung Dreh-Blockierungsvorsprünge (29) aufweist, die unterhalb der Rastausformungen (25) an einem Rastteller (24) des Stößels (12) abragen, zum drehsperrenden Eintreten in die dazu deckungsgleich ausgerichteten Blockierungsaufnahmen (33) eines Blockierungsteiles (31), wobei die Unterseite des Rasttellers (24) flächig auf dem Blockierungsteil (31) aufliegt, **dadurch gekennzeichnet, dass** ein Fortsatz (30) des Stößels (12) im Zuge der Absenkung eine Öffnung (31') des Blockierungsteils (31) durchwandert und die Bremseinrichtung (37) beaufschlagt.

2. Lenkrolle nach Anspruch 1, **dadurch gekennzeichnet, dass** die Richtungs-Feststell-Stellung allein durch ein auf das Laufrad (6) wirkendes Drehmoment aufhebbar ist.

3. Lenkrolle nach einem der Ansprüche 1 oder 2, **dadurch gekennzeichnet, dass** die Rastausformungen (25) an einem einstückig mit dem Stößel (12) ausgebildeten Rastteller (24) ausgebildet sind.

4. Lenkrolle nach einem der Ansprüche 1 bis 3, **dadurch gekennzeichnet, dass** das Blockierungsteil (31) und/oder das Richtungs-Feststellungsteil (26) jeweils als Metallteil ausgebildet sind, während jedenfalls das den Rastteller (24) aufweisende Teil des Stößels (12) und/oder die Bremseinrichtung (37) als Kunststoffteil ausgebildet sind.

5. Lenkrolle nach einem der vorangehenden Ansprüche 1 bis 4, **dadurch gekennzeichnet, dass** der Stößel (12) in seinem oberen Teil als Gegennocken (22) zu dem Schaltnocken (8) ausgebildet ist.

6. Lenkrolle nach Anspruch 5, **dadurch gekennzeichnet, dass** der Gegennocken (22) an einem gesonderten Nockenteil (15) ausgebildet ist und mit dem die Rastausformung (25) aufweisenden Stößelabschnitt schraubverbunden ist.

7. Lenkrolle nach einem der vorangehenden Ansprüche 1 bis 6, **dadurch gekennzeichnet, dass** der Stößel (12) in Richtung auf den Schaltnocken (8) federvorgespannt ist.

8. Lenkrolle nach Anspruch 7, **dadurch gekennzeichnet, dass** die Feder (20) auf das Nockenteil (15) einwirkt.

9. Lenkrolle nach einem der 1 bis 8 vorangehenden Ansprüche, **dadurch gekennzeichnet, dass** der Schaltnocken (8) zwei Schaltstellungen aufweist.

10. Lenkrolle nach Anspruch 9 **dadurch gekennzeichnet, dass** die eine Schaltstellung des Schaltnockens (8) die Richtungs-Feststell-Stellung definiert und über die andere Schaltstellung die Bremseinrichtung (37) aktiviert ist.

## Claims

1. Castor (1) comprising a running wheel (6), a fork (2) and a mounting pin (3), the fork (2) being pivotable about a vertical pivot axis (a) in relation to the mounting pin (3), and a braking device (37) further being arranged in a fork cavity (5) above the running wheel and being displaceable into the braking position by means of a tappet (12) actuated by a control cam (8), the tappet (12) comprising latching projections (25) which, when preloaded by a spring into a direction-locking position, interact with latching recesses (28) of a direction-locking part (26) fixed to the fork, and the tappet (12) comprising rotation-blocking protrusions (29) for interacting with the braking device (37) for complete locking, which protrusions project downwards below the latching projections (25) on a latching plate (24) of the tappet (12) for entering the blocking sockets (33) of a blocking part (31) in a rotationally locked manner, which blocking sockets are oriented congruently thereto, the underside of the latching plate (24) resting flush with the blocking part (31), **characterised in that**, during lowering, an extension (30) of the tappet (12) passes through an opening (31') in the blocking part (31) and acts upon the braking device (37).

2. Castor according to claim 1, **characterised in** the direction-locked position can be released solely by a torque acting on the running wheel (6).

3. Castor according to claim either claim 1 or claim 2, **characterised in that** the latching projections (25) are formed on a latching plate (24) which is formed in one piece with the tappet (12).

4. Castor according to any of claims 1 to 3, **characterised in that** the blocking part (31) and/or the direction-locking part (26) are each formed as a metal part, whereas the braking device (37) and/or the part of the tappet (12) which comprises the latching plate (24) are formed as a plastics part.

5. Castor according to any of claims 1 to 4, **characterised in that** the upper part of the tappet (12) is formed as a countercam (22) to the control cam (8).

6. Castor according to claim 5, **characterised in that** the countercam (22) is formed on a separate cam part (15) and is screwed to the portion of the tappet which comprises the latching projection (25).

7. Castor according to any of claims 1 to 6, **characterised in that** the tappet (12) is preloaded by a spring in the direction towards the control cam (8).

8. Castor according to claim 7, **characterised in that** the spring (20) acts on the cam part (15).

9. Castor according to any of claims 1 to 8, **characterised in that** the control cam (8) comprises two switching positions.

10. Castor according to claim 9, **characterised in that** one switching position of the control cam (8) defines the direction-locked position and the other switching position activates the braking device (37).

## Revendications

1. Roulette pivotante (1) comprenant une roue de roulement (6), une fourche (2) et une broche de montage (3), la fourche (2) étant pivotante par rapport à l'axe de montage (3) autour d'un axe de pivotement vertical (a), un dispositif de freinage (37) étant en outre disposé au-dessus de la roue de roulement (6) dans une cavité (5) de la fourche, le dispositif de freinage (37) étant déplaçable dans la position de freinage par un poussoir (12) actionné par une came de commande (8), le poussoir (12) présentant des structures de verrouillage (25) qui coopèrent, sous la sollicitation d'un ressort dans une direction de fixation de la direction, avec des évidements de verrouillage (28) d'une pièce de fixation de la direction (26) solidaire de la fourche, le poussoir présentant des saillies de blocage en rotation (29) destinées à coopérer avec le dispositif de freinage (37) pour assurer un blocage total, les saillies de blocage en rotation (29) faisant saillie sur une plaque de verrouillage (24) du poussoir (12) au-dessous des structures de verrouillage (25) de sorte à pénétrer en bloquant en rotation dans des ouvertures de blocage (33) correspondantes d'une pièce de blocage (31), la face inférieure de la plaque de verrouillage (24) reposant à plat sur la pièce de blocage (31), **caractérisée en ce qu'**un prolongement (30) du poussoir (12) se déplace lors de l'abaissement à travers une ouverture (31') de la pièce de blocage (31) et sollicite le dispositif de freinage (37).

2. Roulette pivotante selon la revendication 1, **caractérisée en ce qu'**il est possible de sortir de la position de fixation de la direction uniquement par un moment de rotation appliqué à la roue de roulement (6).

3. Roulette pivotante selon la revendication 1 ou 2, **caractérisée en ce que** les structures de verrouillage (25) sont conformées sur une plaque de verrouillage (24) solidaire du poussoir (12).

4. Roulette pivotante selon l'une des revendications 1 à 3, **caractérisée en ce que** la pièce de blocage (31) et/ou la pièce de fixation de la direction (26) est/sont constituée(s) d'une pièce métallique tandis que la partie du poussoir (12) formant la plaque de verrouillage (24) et/ou le dispositif de freinage est/sont constitué(s) d'une pièce en plastique.

5. Roulette pivotante selon l'une des revendications 1 à 4, **caractérisé en ce que** le poussoir (12) est conformé dans sa partie supérieure comme un suiveur de came (22) de la came de commande (8).

6. Roulette pivotante selon la revendication 5, **caractérisée en ce que** le suiveur de came (22) est formée sur un élément de came distinct (15) assemblé par vissage sur la section du pousseur (12) présentant les structures de verrouillage (25).

7. Roulette pivotante selon l'une des revendications 1 à 6, **caractérisé en ce que** le poussoir (12) est sollicité par ressort vers la came de commande (8).

8. Roulette pivotante selon la revendication 7, **caractérisé en ce que** le ressort (20) agit sur l'élément de came (15).

9. Roulette pivotante selon l'une des revendications 1 à 8, **caractérisée en ce que** la came de commande (8) présente deux positions de commande.

10. Roulette pivotante selon la revendication 9, **caractérisée en ce qu'**une position de commande de la came de commande (8) définit la position de fixation de la direction et **en ce que** l'autre position active le dispositif de freinage (37).
